# EUROPÄISCHE PATENTANMELDUNG

(11) **EP 1 688 313 A1**
(43) Veröffentlichungstag der Anmeldung: **09.08.2006**
(21) Anmeldenummer: 05026657.6
(22) Anmeldetag: 07.12.2005
(51) Int. Cl.: B60R 21/01, B60N 2/00

(54) **Sensoreinrichtung zum Erfassen von Insassen eines Kraftfahrzeugs**

(30) Priorität: 02.02.2005 DE 102005004683
(71) Anmelder: Methode Electronics International GmbH, 55435 Gau-Algesheim (DE)
(72) Erfinder: Khoury, Joseph E., Dr., 55457 Gensingen (DE); Siddiqui, Mumtaz Ahmed, 65197 Wiesbaden (DE)
(74) Vertreter: Haft, von Puttkamer, Berngruber, Czybulka

(57) **Zusammenfassung**

Eine Sensoreinrichtung zum Erfassen von Insassen eines Kraftfahrzeugs weist eine Vielzahl von in der Nachbarschaft von Insassenpositionen angeordneten Sensoren (2), die die elektrische Feldstärke ihrer Umgebung erfassen, sowie eine elektronischen Steuereinrichtung zum Auswerten der detektierten Sensorsignale (7) auf, wobei zumindest eine Teilmenge der Sensoren (2) einem Sitz des Kraftfahrzeugs zugeordnet ist. Nach der Erfindung sind alle Sensoren (2) der Sitzschale und der Rückenlehne des Sitzes zugeordnet und sind zumindest zwei der Sensoren (2) seitlich nebeneinander in der Rückenlehne angeordnet. Die Steuereinrichtung weist Mittel zum Unterscheiden unterschiedlicher Belegungszustände des Sitzes auf.

## Beschreibung

Die Erfindung bezieht sich auf eine Sensoreinrichtung zum Erfassen von Insassen eines Kraftfahrzeugs insbesondere für die Ansteuerung von aktiven Sicherheitseinrichtungen mittels einer Vielzahl von in der Nachbarschaft von Inassenpositionen angeordneten Sensoren, die die elektrische Feldstärke ihrer Umgebung erfassen, sowie mittels einer elektronischen Steuereinrichtung zum Auswerten der detektierten Sensorsignale wobei zumindest eine Teilmenge der Sensoren einem Sitz des Kraftfahrzeugs zugeordnet ist

Ein derartige Einrichtung ist z.B. durch die US6158768 bekannt geworden. Danach wird mittels kapazitiven Sensoren die Größe und Sitzposition eines Insassen gemessen, der sich zwischen den einander entgegengesetzt gerichteten Sensoren befindet. Die Sensoren befinden sich im Instrumentenbord, im Dachbereich, in den Türen und in den Rückenlehnen der Sitze. Ein zweistufiges Airbagsystem kann in Abhängigkeit von der Insassengröße, der Sitzposition, der Fahrgeschwindigkeit, der Aufprallschwere mit abgestuft unterschiedlichen Inflationsraten betätigt werden. Die verschiedenen Sensoren sind mit einer elektronischen Steuereinrichtung mit Treiberschaltungen für die Sensoren verbunden, deren Signale durch die Steuereinrichtung ausgewertet werden.

Da die Sensoren unterschiedlichen Montageeinheiten des Kraftfahrzeugs zugeordnet sind, kann die Sensoreinrichtung erst im Kraftfahrzeug selbst mit entsprechend hohem Verkabelungs- und Montageaufwand komplettiert werden, insbesondere als die Verbindungsleitungen weitgehend manuell verlegt werden müssen. Ein weiterer Nachteil besteht darin, dass die Einrichtung erst nach dem Einbau auf die verschiedenen Belegungszustände kalibriert werden kann. Durch die großen Entfernungen zwischen dem Insassen und einer Teilmenge der Sensoren erfordern den Einsatz von komplexen Verstärkern unter dem Einsatz von Aufwärtskonvertern.

Der Erfindung liegt die Aufgabe zugrunde, eine Einrichtung zu schaffen, die mit geringem Aufwand hergestellt, montiert und justiert werden kann.

Diese Aufgabe wird durch die im Kennzeichen des Anspruchs 1 angegebenen Merkmale gelöst. Durch die Anordnung der Sensoren ausschließlich im Sitz ist es möglich, das komplette System bereits beim Sitzhersteller fertigzustellen und zu kalibrieren. Durch hinreichend viele mittig und auch seitlich verteilte Sensoren ist es möglich, nicht nur unterschiedliche Personentypen, sondern auch unterschiedliche Sitzpositionen zu erfassen. Insbesondere lassen sich seitliche Abweichungen von der Mittelposition mittels der seitlich verteilten Sensoren erkennen. Die Steuerungsmittel zum Erfassen des Belegungszustandes beinhalten z.B. vorab ermittelte und abgespeiche Signalpegelmuster der verschiedenen Sensoren, die in ihrer Gesamtheit die jeweilige Belegungssituation zuverlässig abbilden. Die körpernahe Anordnung der Sensoren ergibt eine ortsgenaue Zuordnung zum Insassen und deutliche Unterschiede der gut verarbeitbaren Signale.

Vorteilhafte Weiterbildungen der Erfindung ergeben sich aus den in den Ansprüchen 2 bis 21 gekennzeichneten Merkmalen.

Der Kalibriermodus nach Anspruch 2 ermöglicht optimale Sensoreinstellungen für die verschiedenen Zustandstypen der Belegung. Die jeweiligen Ergebnisse werden bereichsweise in der Steuereinrichtung tabellarisch abgespeichert , so dass spätere Belegungen sicher einem dieser abgespeicherten Muster zugeordnet werden können.

Durch die Sensoren nach den Ansprüchen 3 und 4 werden die unterschiedlichen Körperneigungen und Abweichungen der Sitzposition entlang der Mittelachse sicher erfasst.

Die Sensoren nach den Ansprüchen 5 und 6 befinden sich in unmittelbarer Nähe des abzutastenden Körpers und weisen eine hohe Sensitivität auf, wobei die parallele Ausrichtung zur Sitzoberfläche eine definierte Basis darstellt. Die Schirmlage auf der Rückseite des Sensors verringert erheblich Störeinflüsse und Frequenzschwankungen. Die elektronischen Schaltungen können daher wenig komplex ausgebildet werden.

Der folienartige Träger nach Anspruch 7 fasst mehrere der Sensoren zu einer Baueinheit zusammen, die auch die zugehörigen Leitungen aufweist. Die Lagen können z.B. als selbstklebende Folien ausgebildet und angebracht oder auch photolitografisch erzeugt werden. Der Träger kann auf die Sitzgröße zugeschnitten und unmittelbar unter dem Sitzbezug eingebaut werden.

Der Oszillator nach den Ansprüchen 8 und 9 wird von der Treiberschaltung der Steuereinrichtung gespeist, wobei die Referenzfrequenz eine gute Vergleichsbasis darstellt.

Die Weiterbildungen nach den Ansprüchen 10 und 11 ermöglichen es, die Umgebungseinflüsse insbesondere unterschiedlicher Temperaturen und Luftfeuchte in einfacher Weise zu berücksichtigen, wobei der Referenzsensor nach Anspruch 12 körperunbhängige Vergleichswerte erbringt.

Die Auswertung der Sensorsignale nach den Ansprüchen ermöglich eine sichere Zuordnung zu vordefinierten Belegungszuständen, wobei die Daten nach Anspruch 16 auch Kinder und Tiere einbeziehen.

Das Steuergerät nach Anspruch 18 ermöglicht es, mit geringem Mehraufwand mehrere Sitze abzutasten.

Die Steuerschaltung nach den Ansprüchen 19 und 20 ergibt ein besonders deutliches und entsprechend einfach auszuwertendes digitalisierbares Nutzsignal.

Das Optimierprogramm nach Anspruch 21 ergibt die bestmöglichen Einstelldaten zum Erzeugen und Auswerten der Sensorsignale, ohne dass dafür externe Eingriffe erforderlich sind. Durch periodische Überprüfung lassen sich auch längerdauernde Abweichungen berücksichtigen.

Ein Ausführungsbeispiel der Erfindung ist in der Zeichnung dargestellt und wird im folgenden näher erläutert. Es zeigen:
Figur 1 ein Schema einer Sensoreinrichtung
Figur 2 ein Schaltschema der Sensoreinrichtung nach Figur 1

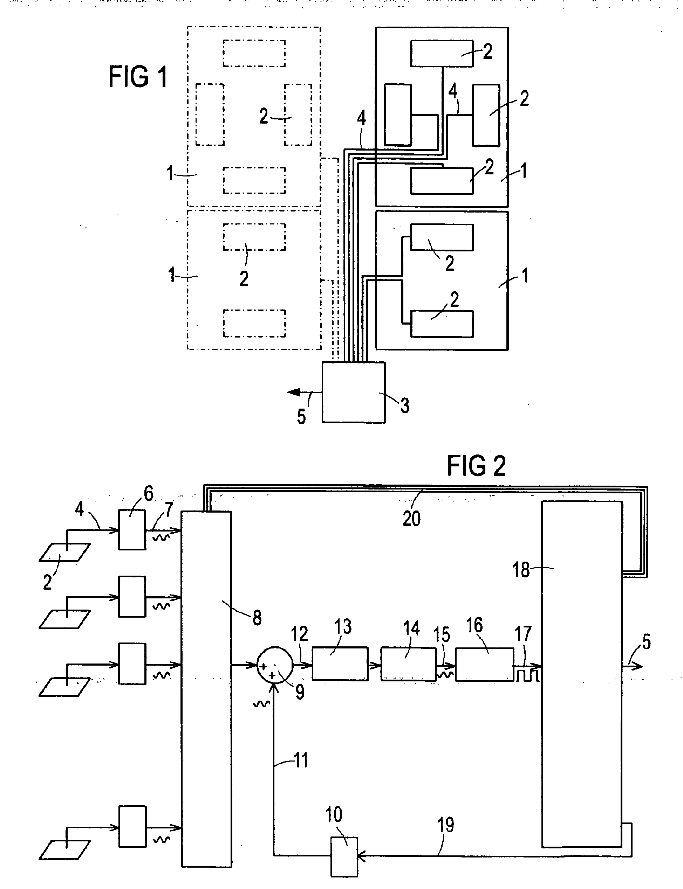

Nach Figur 1 besteht eine Senosoreinrichtung zum Erfassen von Belegungszuständen von Sitzen eines Kraftfahrzeugs aus folienartigen Trägern 1 mit großflächigen kapazitiven Sensoren 2, einem Steuergerät 3 und elektrischen Leitungen 4, die das Steuergerät 3 mit den einzelnen Sensoren 2 verbinden. Die Träger 1 sind z.B. paarweise der Rückenlehne bzw. der Sitzschale eines der Sitze unmittelbar unter dem Sitzbezug und/oder einer komprimierbaren Schaumschicht zugeordnet. Die strichpunktierte Linien deuten die Träger 1 und Sensoren 2 eines zweiten der Sitze an und sind ebenfalls mit dem Steuergerät 3 verbunden, das die empfangenen Sensorsignale auswertet und klassifiziert. Die entsprechenden Ausgabedaten werden über eine Datenleitung 5 z.B. einem Airbag zugeleitet.

Die Elektroden der Sensoren 2 sind als metallische Lagen auf der Insassen zugewandten Oberfläche der Träger 1 ausgebildet, auf deren Rückseiten deckungsgleiche geerdete Schirmlagen angeordnet sind.
Der obere Träger 1 ist hier der Rückenlehne zugeordnet und dieser in seiner Ausdehnung angepasst. Er weist zwei der entlang der Mittelachse des Sitzes mit Abstand übereinander angeordneten Sensoren 2 sowie im mittleren Höhenbereich zwei der seitlich angeordneten Sensoren 2 auf. Der untere Träger 1 weist zwei entlang der Mittelachse des Sitzes mit Abstand hintereinanderliegende Sensoren 2 auf. Mit dieser Konfiguration können die unterschiedlichen Belegungszustände und Sitzpositionen abgebildet werden. Die seitlichen Sensoren 2 erfassen dabei die seitlichen Abweichungen von der aufrechten Körperhaltung. Die mitteleren Sensoren der Rückenlehne erfassen die Körperhöhe. Die Sensoren der Sitzschale lassen das Körpergewicht und die Verlagerung in der Fahrtrichtung erkennen.

Nach Figur 2 sind die Sensoren 2 über die Leitungen 3 mit jeweils einem im Steuergerät vorgesehenen Signalgenerator 6 verbunden, der die Sensoren 2 speist und die empfangene Sensorsignale 7 an einen Multiplexer 8 übergibt. Dieser fragt die verschiedenen Sensorsignale 7 reihum sukzessive ab und gibt sie an eine gemeinsame Signalverarbeitung des Steuergeräts 3 weiter, wobei ein dem Sensorsignal 7 in einem Addierer 9 ein in einem Referenzsignalgenerator 10 erzeugtes Referenzsignal 11 hinzugefügt wird. Das resultierende Nutzsignal 12 wird einem Hülldetektor 13 übergeben, der die Hüllwerte des Nutzsignals erfasst und an einen Tiefpassfilter 14 weiterreicht, der die Störfrequenzen des Nutzsignals 12 eliminiert. Das sinsusförmige Ausgangssignal 15 des Tiefpassfilters 14 wird mittels eines Komparators 16 in ein Rechtecksignal 17 umgeformt und einem Mikroprozessor 18 zugeleitet. Dieser errechnet die zugehörigen Signalwerte und ordnet sie den bereichsweise abgelegten Referenzdaten für die verschiedenen Belegungszustände zu. Das Ergebnis wird auf der Datenleitung 5 ausgegeben. Der Mikroprozessor 18 ist ferner über eine Überwachungsleitung 19 mit dem Referenzsignalgenerator 10 sowie über weitere Steuerleitungen 20 mit dem Multiplexer 8 verbunden.

### Bezugszeichen

- 1: Träger
- 2: Sensor
- 3: Steuergerät
- 4: Leitung
- 5: Datenleitung
- 6: Signalgenerator
- 7: Sensorsignal
- 8: Multiplexer
- 9: Addierer
- 10: Referenzsignalgenerator
- 11: Referenzsignal
- 12: Nutzsignal
- 13: Hülldetektor
- 14: Tiefpassfilter
- 15: Ausgangssignal
- 16: Komparator
- 17: Rechtecksignal
- 18: Mikroprozessor
- 19: Überwachungsleitung
- 20: Steuerleitung

## Patentansprüche

1. Sensoreinrichtung zum Erfassen von Insassen eines Kraftfahrzeugs insbesondere für die Ansteuerung von aktiven Sicherheitseinrichtungen mittels einer Vielzahl von in der Nachbarschaft von Insassenpositionen angeordneten Sensoren (2), die die elektrische Feldstärke ihrer Umgebung erfassen, sowie mittels einer elektronischen Steuereinrichtung zum Auswerten der detektierten Sensorsignale (7),
wobei zumindest eine Teilmenge der Sensoren (2) einem Sitz des Kraftfahrzeugs zugeordnet ist,
**dadurch gekennzeichnet, dass** alle Sensoren (2) der Sitzschale und der Rückenlehne des Sitzes zugeordnet sind und
dass zumindest zwei der Sensoren (2) mit Abstand nebeneinander in den Seitenbereichen der Rückenlehne und/oder in der Sitzschale angeordnet sind und
dass die Steuereinrichtung Mittel zum Unterscheiden unterschiedlicher Belegungszustände des Sitzes aufweist.

2. Sensoreinrichtung nach Anspruch 1,
**dadurch gekennzeichnet , dass** die Steuereinrichtung selbstlernende Betriebsmodi zum Kalibrieren der unterschiedlichen Belegungszustände aufweist.

3. Sensoreinrichtung nach Anspruch 1 oder 2,
**dadurch gekennzeichnet, dass** die Rückenlehne entlang ihrer Mittelachse zwei der übereinaderliegenden Sensoren (2) ausweist.

4. Sensoreinrichtung nach Anspruch 1, 2 oder 3,
**dadurch gekennzeichnet , dass** Sitzschale entlang ihrer Mittelachse zwei der hintereinanderliegenden Sensoren (2) aufweist.

5. Sensoreinrichtung nach einem der Ansprüche 1 bis 4,
**dadurch gekennzeichnet, dass** die Sensoren (2) als großflächige kapazitive Sensoren (2) mit metallischen Lagen ausgebildet sind, die sich parallel zum jeweiligen Teil der Sitzoberfläche erstrecken.

6. Sensoreinrichtung nach Anspruch 5 ,
**dadurch gekennzeichnet, dass** die metallischen Lagen auf einem folienartigen flexiblen dielektrischen Träger angebracht sind, auf dessen der Sitzoberfläche abgewandten Rückseite entsprechende Erdungslagen angebracht sind.

7. Sensoreinrichtung nach einem der vorhergehenden Ansprüche,
**dadurch gekennzeichnet , dass** alle Sensoren (2) der Rückenlehne und/oder der Sitzschale auf dem großlächigen gemeinsamen Träger angeordnet sind, an dem auch die zugehörigen elektrischen Leitungen (4) angebracht sind.

8. Sensoreinrichtung nach einem der vorhergehenden Ansprüche,
**dadurch gekennzeichnet , dass** die als Elektroden dienenden Lagen Funktionselemente eines Oszillators sind, dessen Frequenz mittels der Schwebungsfrequenz mit einer Referenzfrequenz vergleichbar ist.

9. Sensoreinrichtung nach Anspruch 8,
**dadurch gekennzeichnet , dass** die Referenzfrequenz durch die Frequenz des leeren Sitzes bestimmbar ist.

10. Sensoreinrichtung nach Anspruch 8 oder 9,
**dadurch gekennzeichnet , dass** die aktuellen Umgebungseinflüsse auf die Sensoren (2) mittels Kompensationsalgorithmen und einem Kalibriersystem kompensierbar sind.

11. Sensoreinrichtung nach Anspruch 10,
**dadurch gekennzeichnet , dass** die Temperatureinfüsse durch Anwendung eines Algorithmus kompensierbar sind, der durch Bestimmen eines konstanten Sensorwertes bei verschiedenen Temperaturen, Bestimmung der temperaturbedingten Frequenzabweichungen und Festlegen von verschiedenen Abweichungsbereichen durch Multiplizieren des konstanten Sensorwertes für die verschiedenen Temperaturen ermittelbar ist.

12. Sensoreinrichtung nach Anspruch 11,
**dadurch gekennzeichnet, dass** die Kompensation und Abstimmung der Sensorsignale (7) mit Hilfe eines Referenzsensors erfolgt, der in der Umgebung des Sitzes angeordnet, aber nicht auf den Insassen gerichtet ist.

13. Sensoreinrichtung nach einem der vorhergehenden Ansprüche,
**dadurch gekennzeichnet, dass** die Sensorsignale (7) nach Zeit, Phase und Frequenz analysiert und einem bestimmten Belegungszustand zugeordnet werden.

14. Sensoreinrichtung nach Anspruch 13,
**dadurch gekennzeichnet, dass** die Sensoren (2) periodisch abgefragt werden und dass die abgefragten Werte mit in einer Datenbank der Steuereinrichtung bereichsweise abgelegten Referenzdaten zu den verschieden Belegungszuständen vergleichbar sind.

15. Sensoreinrichtung nach Anspruch 14,
**dadurch gekennzeichnet, dass** das Gewicht des Insassen anhand der Signalfrequenz und der gespeicherten Frequenzbereiche bestimmbar ist.

16. Sensoreinrichtung nach Anspruch 14 oder 15,
**dadurch gekennzeichnet , dass** in der Datenbank bereichsweise Tieren, Kindern und/oder Kindersitzen zugeordnete Sensorwerte gespeichert sind.

17. Sensoreinrichtung nach einem der vorhergehenden Ansprüche,
**dadurch gekennzeichnet , dass** die Steuereinrichtung als Steuergerät (3) ausgebildet ist, an das die Sensoren (2) anschließbar sind, die zusammen mit dem Steuergerät (3) die Sensoreinrichtung bilden.

18. Sensoreinrichtung nach Anspruch 17,
**dadurch gekennzeichnet, dass** an das Steuergerät (3) Sensoren (2) weiterer Sitze anschließbar sind und mit diesem eine Mehrfachsensoreinrichtung bilden.

19. Sensoreinrichtung nach einem der vorhergehenden Ansprüche,
**dadurch gekennzeichnet, dass** das Steuergerät (3) für jeden der Sensoren (2) einen Signalgenerator (6) aufweist, dass durch einen Referenzsignalgenerator (10) ein periodisches Referenzsignal (11) erzeugbar ist, das elektrisch mit dem Sensorsignal (7) in einem Addierer (9) verknüpfbar ist, und
dass die Addition der beiden einander überlagerten Signale ein Nutzsignal (12) von veränderlicher Amplitude und Frequenz ergibt, das mit Durchschnittswerten abgleichbar ist.

20. Sensoreinrichtung nach Anspruch 19,
**dadurch gekennzeichnet, dass** das Steuergerät (3) einen Hülldetektor (13) zum Erfassen der Hüllwerte des Nutzsignals (12) sowie einen Tiefpassfilter (14) aufweist, der Störfrequenzen des Nutzsignals (12) eliminiert, und dass das Steuergerät (3) ferner mit einem Komparator (16) versehen ist, der das sinusförmige Ausgangssignal des Tiefpaafilters 14 in ein Rechtecksignal (17) umwandelt, das in einem Microcontroller (18) auswertbar ist.

21. Sensoreinrichtung nach Anspruch 21,
**dadurch gekennzeichnet, dass** der Microcontroller (18) ein Optimierprogramm zum Ermitteln der besten Einstellwerte für die Sensoren (2) aufweist.
